# EUROPEAN PATENT SPECIFICATION

(11) **EP 1 703 378 B1**
(45) Date of publication and mention of the grant of the patent: **13.03.2019**
(21) Application number: 05005636.5
(22) Date of filing: 15.03.2005
(51) Int. Cl.: G06F 9/448

(54) **Iterator for accessing an object collection**
Wiederholer zum Zugreifen auf eine Objektsammlung
Itérateur pour accéder à une collection d'objets

(43) Date of publication of application: 20.09.2006
(73) Proprietor: Oracle America, Inc., Redwood City, CA 94065 (US)
(72) Inventor: Hans, Sebastian, 14059 Berlin (DE)
(74) Representative: D Young & Co LLP

(56) References cited:
- EP-A- 0 924 613
- EP-A2- 0 309 269
- WO-A-03/005203
- US-A1- 2003 084 446
- US-B1- 6 260 195
- BACKUS, BAUER, GREEN, KATZ, MCCARTHY, PERLIS, RUTISHAUSER, SAMELSON, VAUQUOIS, WEGSTEIN, VAN WIJNGAARDEN, WOODGER: "Revised report on the algorithm language ALGOL 60" COMMUNICATIONS OF THE ACM, vol. 6, no. 1, January 1963 (1963-01), pages 1-17, XP002353314
- WOODGER: "Supplement to the ALGOL 60 report" COMMUNICATIONS OF THE ACM, vol. 6, no. 1, January 1963 (1963-01), pages 18-23, XP002353315
- FU M-M ET AL: "A concurrent programming environment for memory-mapped persistent object systems", PROCEEDINGS OF THE ANNUAL INTERNATIONAL COMPUTER SOFTWARE AND APPLICATIONS CONFERENCE. PHOENIX, NOV. 1 - 5, 1993; [PROCEEDINGS OF THE ANNUAL INTERNATIONAL COMPUTER SOFTWARE AND APPLICATIONS CONFERENCE], LOS ALAMITOS, IEEE COMP. SOC. PRESS, US, vol. CONF. 17, 1 November 1993 (1993-11-01), pages 291-297, XP010140176, DOI: 10.1109/CMPSAC.1993.404180 ISBN: 978-0-8186-4440-5

## Description

### FIELD OF THE INVENTION

The present invention relates to an iterator of a chip device for accessing objects of an object collection provided on the chip device.

### BACKGROUND OF THE INVENTION

Communication networks are becoming increasingly popular and are now widely being used for communications in private and business environments. Such networks allow the fixed wired or wireless transmission of information between users, e.g. during a telephone conversation between telephone terminals or a data communication between computing devices. Networks generally operate according to a specific standard for wirebound or wireless communications. Communication standards include TCP/IP, the GSM (Global System for Mobile Communication) standard, the UMTS (Universal Mobile Telecommunications System) standard, or networks using the GSM or 3G standard, the CDMA 2000 (Code Division Multiple Access 2000) standard, wireless LAN standards and others.

A telephone is one type of wireless or wirebound communication device, widely used in voice and/or data communications. Similarly, a computer is a type of wireless or wirebound communication device, which is able to couple two communication networks for data transmission and/or assisting in voice communications with other communications or computing devices.

Devices such as telephones or computing devices may include a card device or chip device, for enabling access to a network or a plurality of different networks. The chip device can be a plastic card embedded with a computer chip for storing data and for carrying out processing operations to enable the device to access the network or networks or to obtain a service. The chip device may store information pertaining to a particular user or subscriber of a network, allowing a network operator to identify the user for properly directing calls to the user, for providing features of subscribed services, for billing purposes and similar.

The chip device may be insertable into the device, into a dedicated slot or receiving compartment, or may form an integral part thereof. The chip device may for example be a smart card, e.g. as defined in the ISO7816 standardisation series.

Newer devices may have substantial computing power and are thus becoming increasingly versatile and may not only offer simple communication services such as voice communication services, but may offer also data service for virtually any type of application such as information services, maintenance of personal information, purchasing transactions, banking services and similar.

A chip device can generally be used for obtaining any service using any kind of computing device, such as a desk top computing device connected to a server, a banking teller machine, an airline check-in terminal and similar. In this case the chip device may be inserted into a dedicated reading device for enabling a data exchange between the chip device and the service provider.

In any of the above examples the chip device will be required to provide a variety of functions for proper operation and service provision and at least some of these functions will require a storage of code sections on the chip device and execution of the code sections by a processing unit of the chip device. During regular operation of the chip device an application or other triggering events may instruct the chip device execute a code section on the chip device, to retrieve associated information or use this information for providing a particular service or for responding to a request.

One possible framework for operating a chip device is the Java Card platform, V 2.2, Sun Microsystems, Inc. The Java Card platform provides for an operation environment with a given limited set of functions, which can be utilized by an entity operating or accessing the chip device.

However, with increased processing power and storage capacity of chip devices, the functionality provided by the Java Card platform V 2.2 or other operating systems for card devices may be perceived as limited.

EP 0 924 613 relates to a method for constructing stable iterators in a shared data collection. A stable object iterator provides a list of all persistent objects within a collection of objects. The iterator associates a label with each persistent object in a collection of stable objects. The label indicates whether the associated object was added to or deleted from the collection before or after the inception of an iterator. Multiple persistent iterators are supported by providing an indication of which iterators each persistent object is, or is not, visible to.

An article by Mei-Mei Fu and Partha Dasgupta, entitled "A Concurrent Programming Environment for Memory-Mapped Persistent Object Systems", published in the Proceedings of the Annual International Computer Software and Applications Conference, Phoenix, November 1-5, 1993 (ISBN: 978-0-8186-4440-5), discloses (see the Abstract) a design and implementation of a persistent object system that uses _memory-mapping to directly map objects from the persistent store to the address space of user programs.

### SUMMARY OF THE INVENTION

It is therefore desirable to improve the capabilities of chip devices and improved access to functions available on a chip device. The subject matter claimed herein is defined in the claims.

According to an embodiment a chip device includes an iterator that comprises a handler for accessing objects of an persistent object collection; a state indicator for indicating one of a persistent and a transient state of the iterator; initialising means for initialising the handler after a reset into a position held with respect to the persistent object collection before the reset, if the state indicator indicates the persistent state, and for initialising the handler after a reset into an initial position with regard to the persistent object collection, if the state indicator indicates the transient state.

Accordingly, the invention establishes a concept for objects assembled in an persistent object collection on a chip and
and provides for consistent access to the objects of the persistent object collection under all circumstances where the chip device has been subjected to a reset operation. If the iterator is set into the persistent state, it thus may be assured that the persistent object collection is accessed based on the location prior to the reset. Likewise, if the iterator is in the transient state, the persistent object collection may be accessed always at an initial position after a reset.

According to another example the reset includes resetting one of the chip device and an application executed on the chip device. Thus, the reset may not only pertain to the entire chip device, but also to parts thereof, including applications residing on the chip device.

According to still another example handler position storage means are provided for storing a current handler position of the handler with regard to the persistent object collection in a non-volatile memory, if the state indicator indicates the persistent state. Accordingly, the handler position can be saved during any event leading to the reset of the card device.

According to another example the handler position storage means is adapted to store the current handler position each time the position of the handler is modified during operation of the chip device. According to an alternative, the current handler position may also be stored in a non-volatile memory upon detecting a reset instruction.

According to another example the iterator may include initial position storage means for permanently storing initial position of the handler, if the state indicator indicates the transient state.

According to still another example, the iterator may be adapted to switch the state indicator between the persistent state and the transient state. Accordingly, the state of the iterator can be modified, e.g. during operations or at any other point in time.

According to another example, the iterator is a persistent object and, the iterator may be generated based on a request to the persistent object collection of the chip device.

According to another example, the iterator comprises an interface for receiving an instruction to dereference the iterator from the persistent object collection, thus allowing for example a deletion of the iterator for updates and similar.

According to another example, the iterator comprises an access interface for communicating with an application request an access to the persistent object collection, the application being internal or external to the chip device. In an alternative, the access interface is sharable by a plurality of applications. Accordingly, internal and also external applications may gain access to the persistent object collection on the chip device via the iterator.

Further, according to another example, the iterator is assigned to a communication channel and, according to another example, the chip device is a card device such as a smart card.

According to another embodiment, a method for accessing objects of a persistent object collection of a chip device comprises: determining a state indicator indicating one of a persistent and a transient state; if the state indicator indicates the persistent state, initialising a handler for accessing the objects of the persistent object collection after a reset into a position held with regard to the persistent object collection before the reset; and if the state indicator indicates the transient state, initialising the handler after a reset into an initial position with regard to the persistent object collection.

In another example, a program or group of programs may be provided having instructions adapted to carry out at least part of the methods of any one of the above embodiments. A computer readable medium may embody the program and may be provided on a computer program product.

Further embodiments of the invention are discloses with regard to further claims.

### BRIEF DESCRIPTION OF THE DRAWINGS

- Fig. 1: illustrates elements of an environment including a chip device according to an embodiment of the invention;
- Fig. 2: illustrates operations of a method for accessing objects of a persistent object collection of a chip device according to an embodiment of the invention;
- Fig. 3: illustrates elements of an environment including a chip device according to an embodiment of the invention;
- Fig. 4: illustrates operations of a method for accessing objects of a persistent object collection of a chip device, particularly operations for storing a handler position;
- Fig. 5: illustrates operations of a method for accessing objects of a persistent object collection of a chip device according to another embodiment of the invention, particularly illustrating operations to set a mode indicator;
- Fig. 6: illustrates elements of an environment including a chip device according to an embodiment of the invention; and
- Fig. 7: illustrates elements of an environment including a chip device according to an embodiment of the invention.

### DETAILED DESCRIPTION OF THE PREFERRED EMBODIMENTS

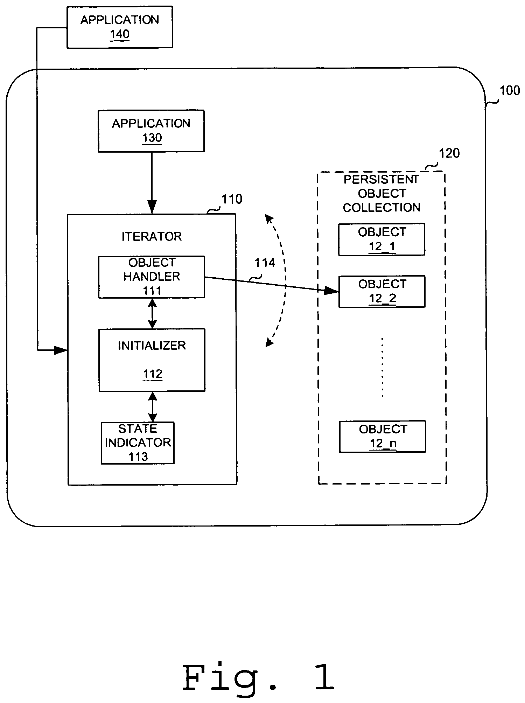

In the following an embodiment of the invention will be described with regard to Fig. 1, illustrating elements of an environment including a chip device.

Fig. 1 illustrates a chip device 100 including an iterator 110 for enabling access to objects of a persistent object collection 120 and two exemplary applications 130 and 140 for accessing the persistent object collection. The persistent object collection 120 comprises a plurality of objects 12_1, 12_2 ... 12_n, e.g. stored in a memory of the card device 100.

The iterator 110 comprises an object handler 111 with a handle 114 for selective access to the objects of the object collection 120, e.g. upon request by one of the applications 130 and 140. Moreover, the iterator comprises a state indicator 113 for indicating one of a persistent and a transient state of the iterator 110. Still further, the iterator comprises an initializer 112 for initialising the handler after a reset operation into a position held with regard to the object collection for the reset operation, if the state indicator indicates the persistence state, and for initialising the handler after the reset operation into an initial position with regard to the object collection, if the state indicator indicates the transient state.

The iterator is accessible for the applications 130 and 140, i.e., the applications can access one of the objects of the object collection through the iterator.

The object collection is a persistent object collection, i.e. an object collection that exists permanently. For example, the object collection can be generated once upon configuring or first use of the chip device and then maintained throughout the lifetime of the chip device or e.g. until a reconfiguration of the chip device is performed. The object collection is maintained during a reset operation of the chip device, i.e. the object collection is not removed or otherwise deactivated in connection with the reset operation.

The objects of the object collection preferably are stored in a given known sequence, e.g. consecutively, with object 12_1 stored at a first position, object 12_2 stored at a subsequent position and similarly object 12_n at a last position in a memory.

In an example, the object handler keeps its last position with regard to the persistent object collection, i.e. the object handler memorizes the position of the last accessed object. For example, the handle 114 of the iterator remains at the object last accessed. In another example after accessing an object, the handle 114 remains at a position between the last accessed object and a neighbouring object.

If now one of the applications requests access to another one of the objects of the object collection, the position of the other object can be calculated from the memorized or currently held position of the object handler.

If in this example the iterator is in the persistent state, and if the chip device or any element thereof is subjected to a reset operation, the object handler memorizes its last position with regard to the object collection throughout the reset operation, and, after a restart of the chip device or the element thereof, returns to the last held position and locations of elements in the object collection, e.g. upon a new request, are again calculated from this memorized last position of the object handler with regard to the object collection before the reset of the operation.

Alternatively, if in the above example the iterator is in the transient state, the object handler will not memorize its last position during a reset operation of the chip device or an element thereof, but will, after restarting the chip device or the element thereof, move to an initial position, and any position within the object collection will be calculated starting from the predefined initial position. In other words, in the case of the iterator being in the transient state, the reset operation puts the object handler into a predefined initial position with regard to the object collection for a restart of operations. For example, after reset operations the object handler could always be reset or initialised to the first object 12_1 as predefined initial position or any other initial position.

In the following, an embodiment will be described where the above outlined concept is applied to the Java programming environment. This embodiment is intended to illustrate the advantages of an iterator on a card device used for accessing objects of an object collection, but should not be construed as limiting the invention. For example, instead of the Java environment, any other environment could be used to implement the invention.

Java is a programming and application environment which can advantageously be applied to convenient interactions between computing devices. The Java environment enables, during execution of applications involving multiple computing devices, the generation of a virtual machine for the life time of the associated application. In a browser application, e.g. running on a standard desktop computing device, a user can access through input selection operations at the browser application various websites containing all kinds of information. By selecting appropriate identifiers or buttons in a browser window generated by the browser application, the users desktop computer accesses through a network connection a server computing device holding information corresponding to the identifier selected by the user. Information content is then transmitted from the server to the user device and displayed or otherwise represented by the browser application or associated programs.

Such a reproduction of retrieved information can be enhanced using the Java technology as for example described in the Java 2 platform, standard edition, chapter V. 1.4.2 API specification.

The Java environment enables a browser application or other application program to receive and execute small programs, so-called applets, using a Java library resident on a user device and being compatible with the operating system of the user device.

Briefly said, the applets contain a "high level" description of actions to be taken and the browser application or other application interprets and appropriately selects elements from the Java library for execution. Each time an application such as a browser application, utilizes the Java environment, a so-called virtual machine is instantiated, for handling the received Java applets. If the corresponding processing operations, such as display or other reproduction operations, are completed, the virtual machine is released and ceases to exist. For example, closing a corresponding display window at the client computing device could cause such a release of the virtual machine associated with that window. If the application newly wishes to utilize the Java tools, a virtual machine is again instantiated. Multiple virtual machines can coexist at the same time, e.g. depending on a user input at for example a browser application.

The Java principles and concepts initially available for interconnected computing devices such as client devices running a browser application and accessing server through a network have been applied to chip or card devices in order to provide a similar computing environment or operating system for chip devices, thus enabling improved interactions between a chip device and information available on the chip device, and for example a device housing or connecting to the chip device.

An operating environment for chip devices is for example described in the Java Card platform version 2.2, SUN Microsystems, Inc., and provides for a run time environment specification and a virtual machine specification for chip devices. In the Java Card technology, a chip device is thus enabled to receive requests from applications, e.g. containing applets, and to execute the corresponding instructions using locally stored code.

Generally, the Java Card platform operates similarly to the above-described Java 2 platform standard edition for networked computing devices, however, with a reduced set of available functions to conform to the reduced processing and storage capabilities of chip devices. Most notably, the Java Card platform does not provide for the concept of objects and object collections for use in providing services. However, in view of the increased capabilities of processors and storage devices, chip devices have become able to handle larger amounts of data at increased speed and it is desirable to equip chip devices with the programming and performance advantages of handling data in object collections.

Therefore, in an embodiment an iterator and an object collection is provided on the chip device and the chip device is enabled to work with a number of different objects or application programs for proper operation and service provision and at least some of these objects will be resident on the chip device. During regular operation of the chip device an application or other triggering events can then instruct the chip device to access one of the objects stored on the chip device, to retrieve associated information of the object and to use this information for providing a particular service or for responding to a request.

The above embodiment thus provides for a virtual machine specification and runtime environment specification for chip devices, such as smart cards, and enables the provision of applications or objects on a chip device and corresponding access to the applications or objects in view of a provision of a service. Generally, the objects of the chip device are advantageously assembled in object collections stored in one or a number of memory sections of the chip device. During operations a processing unit of the chip device is then able to access the objects of the object collection, to retrieve corresponding information or code, and to perform associated instructions. The object collections comprise objects in a predefined order and thus the iterator can traverse the object collection in either direction by calculating target positions in the object collection from a current position. More precisely, the iterator may be designed to memorize the last accessed object of the object collection and any access to subsequent objects may be calculated on the particular position of the last accessed object.

Accordingly, if an application, such as one of the applications 130 and 140 places a request to the chip device, the Java Card virtual machine handles the request and appropriately accesses information on the chip device.

While this process may lead to suitable access to objects during regular operations, problems may occur, if the chip device is removed from the mobile device, or if otherwise a supply voltage is turned off. Upon restarting the chip device, or upon reinitialising the chip device, upon a return of the supply voltage or other event, proper access to the objects in the object collection may no longer be possible.

This problem is aggravated by the fact that, differing from the Java 2 platform for networked computing devices, the Java Card technology provides for a virtual machine in the Java environment having a life time which is the life time of the card. Accordingly, unlike in the Java 2 platform, where a virtual machine is created for the lifetime of a requesting application, the Java Card platform provides for a virtual machine implementation having the same lifetime as the card. In other words, upon manufacturing a chip device a Java Card virtual machine is instantiated and remains instantiated on the chip device throughout the entire life time of the chip device for handling requests from within or outside the chip device. Thus, even if the application ceases to use the Java Card virtual machine or if the application itself ceases to exist, e.g. if the application is removed, or otherwise becoming inactive, the Java Card virtual machine does not cease to exist. The Java Card virtual machine rather continues to exist, through the lifetime of the chip device and other applications may use the Java Card virtual machine for accessing information on the chip device. If the access to information on the chip device is handled through an iterator, such as the iterator 100 of the chip device 100 shown in Fig. 1, the object handler 111 appropriately selects objects of the object collection 120 on the basis of requests from the applications.

As the Java Card virtual machine does not cease to exist with an application accessing the chip device, such as with the end of a session, an application no longer using the iterator for accessing an object collection will leave the object handler in a certain last state, depending on a last access object. If now a subsequent operation is required e.g. upon request of another application, this other application may not be aware of the position of the handler as left by the previous application, and proper access to an object collection may not be possible or only possible if the application knows the last state of the iterator.

To solve this problem of undefined positions of the object handler, the iterator is provided with two possible states, a persistent state and a transient state. In the persistent state, the handler is initialised after a reset operation into a position held with regard to the object collection before the reset, and, in the transient state the handler is initialised after a reset into an initial position with regard to the object collection, the initial position being any predefined position.

Accordingly, when an application ceases to use the chip device or ceases to access the object collection of the chip device, such as the object collection 120 of the chip device 100, the chip device or an element thereof, such as the iterator may be reset. Also, when the chip device is removed from a power supply, e.g. by removing the chip device from an associated computing device, e.g. a mobile device, the chip device will be reset.

After the reset, as the state indicator indicates the persistent or transient state of the iterator, any application accessing the object collection on the chip device, is able to properly access the objects of the object collection, e.g. by calculating a position of the object handler from an initial position, if in the transient state, or from a last held position, if in the persistent state.

It is noted that the above example of the Java Card platform only constitutes a preferred embodiment for realisation of the invention. Any other operation system for the chip device can instead be used for implementing the invention.

In another embodiment, the iterator comprises a handler for accessing object of an object collection, a state indicator for indicating one of a persistent and a transient state of the iterator, and an initializer for initialising the handler after a reset operation into a position held with regard to the object collection before the reset, if the state indicator indicates the persistent state, and for initialising the handler after a reset into an initial position with regard to the object collection, if the state indicator indicates the transient state. The reset operation may in this connection be any kind of reset operation pertaining to the chip device or an application accessing the chip device or the object collection or may pertain to the iterator itself. For example, a reset operation may be triggered via a command received at the chip device or generated within the chip device. Alternatively, in addition thereto, a reset operation may be triggered upon removal and reapplication of a power supply to the chip device, e.g. if the chip device is removed from a computing device such as a mobile telephone or a chip device reading device and reinserted.

For memorizing the handler position, a handler position memory may be provided for storing a current handler position of the handler with regard to the object collection, if the indicator indicates the persistence date. This memory preferably is a non-volatile memory, in order to avoid a loss of the handler position upon a power failure or removal of a power supply. This handler position memory may also be adapted to store the current handler position each time the position of the handler is modified during operation of the chip device, in order to constantly trace the position of the handler so that in case of an unexpected reset operation, e.g. removal of a part supply, the handler position can be recovered. Alternatively, the handler position memory may also be adapted to store the current handler position in a non-volatile memory upon detecting a reset operation, e.g., if the reset command or reset instruction is detected, a current handler position can be saved for recovery of the handler position after restart of the iterator.

In a further example an initial position memory is provided for permanently storing an initial position of the handler, if the state indicator indicates the transient state. Both, the initial position memory and the handler position memory may be resident on the same storage device, such as a storage unit provided on the chip device.

Consequently, when the indicator indicates the persistent state, the initializer after a restart can read the current handler position from the handler position memory, and, if the state indicator is indicating the transient state, the initial position for the handler can be recovered from the initial position memory.

According to another alternative, the state indicator is able to switch or be switched between the persistent state and the transient state allowing a change of the operational mode of the card device or iterator upon need.

The iterator itself can be a persistent object, for example generated based upon a request to the object collection.

In another example, an interface may be provided for receiving an instruction to de-reference the iterator from the object collection, e.g. in an process of deleting the iterator, modifying a computing environment on the chip device and similar.

An access interface provides for communicating with one or a plurality of applications, such as the application 130 or the application 140. Applications may reside on the chip device itself, e.g. application 130, or may be arranged external thereto, such as the application 140 and use the interface for access. For example, the application 140 may be resident on a computing device accommodating or connecting to the chip device, such as a mobile telephone, a mobile computing device and similar.

For proper access to the object collection, the iterator may further be assigned to one or more communication channels enabling access to the chip device from the outside, e.g. from the computing device accommodating the chip device, or a further computing device, e.g. accessible via a network. A communication channel may be a logical channel.

In the following further examples of the elements of the arrangement shown in Fig. 1 will be outlined in detail. It is noted that the following description pertains to further examples and should not be construed as limiting the invention.

The chip device 100 shown in Fig. 1 can be any constituted by any unit embedded in for example a plastic card or other carriers. Usually, a chip device comprises a processing element for realising the functionality of the chip device. Further, the chip device usually comprises a memory section for storing system data and application data. Even though in Fig. 1 a processing unit is not specifically illustrated, the processing unit can be understood as comprising at least the iterator 110 or parts thereof, for realising the functionality of the iterator. A processing unit may also handle communications to the outside or internal communications of the card device. Similarly, the card unit 100 of Fig. 1 does not specifically illustrate a storage section, however, the storage section can be considered to comprise at least the object collection 120 with the individual objects 12_1, 12_2 ... 12_n.

In an example the chip device is constituted by a card device such as a smart card, and can be used for various applications, including bank transactions, identification applications, authentication applications, and similar. Further, the card device may be constituted by or include an identification module such as a subscriber identification module used in mobile communications.

The card device preferably is insertable into a host computing device, such as a general purpose computing device including a card reader, a mobile computing device or mobile telephone.

If inserted into the host computing device, the card device is accessible by the host computing device or applications residing thereon, or accessing the host computing device, and the chip devices functionality may be utilized by applications accessing the chip device.

The object collection 120 can generally be any kind of data structure or list, sets and trays, including those known in the art. In one example the object collection is a collection framework with a set of data structures or objects for the Java Card platform.

The object collection includes a plurality of objects, such as the objects 12_1, 12_2 - 12_n, which may constitute a library of code elements, application data, system data and similar. An object may comprise or constitute executable code sections for use by the chip device or an application accessing the object collection. Preferably, the objects of the object collection are accessible and stored in a predetermined sequence or order, for example the objects can be consecutively stored in a memory partition of a memory of the chip device. Accordingly, a first object such as the object 12_1 can be stored at a first memory location, the object 12_2 can be stored at a second, subsequent memory location and so on and so forth and the object 12_n can be stored at an ends location. The chip device may comprise a single object collection, as shown in Fig. 1, but in an alternative case a plurality of object collections can be made available on the chip device.

The iterator 110 of the chip device 100 is provided for handling access to object of the object collection upon a request. The iterator may be implemented by use of coded instructions for execution on a processing unit of the chip device, i.e., the iterator may be realised in software, however, it is also possible that the iterator is at least partially realised as hardware or firmware on the chip device.

To manage access to the object of the object collection the iterator comprises an object handler 111, having a handle 114 directed to one of the objects of the object collection. The handle 114 of the object handler may be realised as a pointer, as generally known in the software field, or may be realised by any other means specifying one of the objects of the object collection or any other position in a memory accommodating the object collection. Thus, the handle 114 may be arranged to always point to a specific memory location of the memory accommodating the object collection, wherein the specific location may be holding an object of the object collection, or any other piece of information or simply being a predefined location within the memory.

Preferably, the object handler 111 enables a traversing of the object of the object collection in either direction, i.e. from the object 12_1 towards the object 12_n or vice versa, from the object 12_n towards the object 12_1.

As noted above, the object handler, if the iterator is in the persistent state will always memorize the last position of the handle 114 with regard to the object collection, e.g. during a reset operation of all or parts of the chip device. For this purpose the iterator 110 includes an initializer 112, configured to initialise the object handler after a reset operation based on the state of the iterator. The initializer 112 obtains the state of the iterator from the state indicator 113, e.g. upon receiving a request to initialise the object handler. If the state indicator indicates that the iterator is in the persistent state, the initializer will initialise the object handler or more precisely the handle 114 of the object handler 111 into the position held with regard to the object collection before the reset operation. If the state indicator indicates that the iterator is in the transient state, the initializer will initialise the handle 114 into an initial position. The initial position may be any position within the object collection, such as a predefined location, e.g. a location of one of the object, or any other location of a memory holding the object collection.

In order to be able to be initialised into the previous position, in the persistent state, or into the initial position in the transient state, the object handler preferably memorizes the position of the handle 114 during operations or upon receiving a reset instruction. For example the initial position for the transient state and the current position for the persistent state may be stored in a non-volatile memory of the chip device, for use after a reset operation during initialisation of the iterator. The state indicator 113 may be constituted by a flag, which, if that indicates the persistent state and if not set, indicates the transient state of the iterator. This flag may also be stored in a non-volatile memory of the iterator or may be memorized by any other means. It is noted that any other configuration or flag may be used to indicate the persistent or transient state.

In an example the iterator is provided for enabling an application such as the application 130 or the application 140 to access an object of the object collection and retrieve corresponding information, e.g. program code, application data, and similar. Through the iterator the applications are able to traverse the object collection in either direction, and also to modify the object collection during iteration, using the current position of the handle 114 during the iteration. For example, if it is assumed that the handle 114 in an idle state always lies between two objects, such as between object 12_1 and object 12_2, an application could instruct the iterator to retrieve the object above the current position of the handle 114 or below the current position of the handle 114. Upon receiving such an instruction to retrieve the upper or lower objects from the current position, the iterator retrieves the corresponding object and places the handle 114 one step further in the upper or lower direction, in the present case to the next position between two objects in the upper or lower direction. It is noted that an object usually is not physically removed from the object collection, but that only a copy of the object is retrieved from the object collection.

As the iterator 110 itself, or its elements, the object handler 111, the handle 114, the initializer 112 and the state indicator 113 may be at least partially realised in software or hardware.

The applications 130 and 140, as illustrated in the Fig. 1, may reside on the chip device, or at an external location, for example, application 140 may reside on a computing device hosting the chip device, or on a still further computing device having access to the chip device, e.g. through a hosting computing device.

An application may be constituted by any service application executed in connection with the chip device, such as an application to retrieve information stored on the chip device, trigger certain functionality of the chip device and similar. Alternatively or in addition thereto the application may be constituted by a portion of an operating system of the chip device or a hosting computing device and similar.

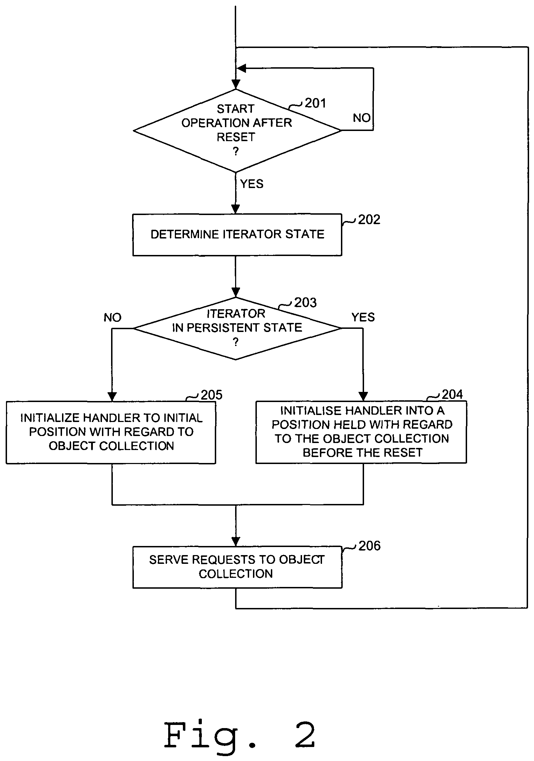

In the following a further embodiment of the invention will be described with regard to Fig. 2.

Fig. 2 illustrates operations of a method for accessing objects of an object collection according to another embodiment of the invention. The operations of Fig. 2 may be carried out using the arrangement shown in Fig. 1, however, Fig. 2 is not limited thereto.

In Fig. 2 it is assumed that the chip device was subject to a reset operation for resetting at least part of the chip device. For example, a reset operation can include a removal of a power supply for the chip device, or may comprise a command instructing a reset or re-initialisation of at least parts of the chip device. Accordingly, in an operation 201 it is determined whether there is an instruction to start operations after the reset. For example, a re-initialisation or start of operations after the reset may be triggered by reapplying a power supply voltage to the chip device or via a command instructing the chip device to initialise.

As long as the start or initialisation instruction is absent, the flow continues in a waiting loop. If the decision in operation 201 is "YES", i.e. if a start or initialisation operation is triggered, in operation 201 the state of the iterator is determined, i.e. it is determined whether the iterator is in the persistent state or the transient state. For example, with reference to Fig. 1, the initializer 112 determines the state of the state indicator 113, in order to gain information on the state of the iterator. Preferably, the state of the iterator is available from a non-volatile memory, i.e. a memory which maintains its content during reset operation.

Thereafter, in an operation 203 it is determined whether the iterator is in the persistent state, e.g. whether the state indicator 113 of Fig. 1 indicates the persistent state. If in operation 203 the decision is "YES", indicating that the iterator indeed is in the persistent state, the object handler is initialised into the position held by the object handler with regard to the object collection for the reset operation. Corresponding information regarding the position of the object handler, such as the object handler 111 or the handle 114 of Fig. 1, in an example is obtained from a non-volatile memory tracking the position of the handle during regular operations of the iterator, or storing the last position of the handle upon detecting a reset instruction. Accordingly, after the re-initialisation of the iterator, applications can continue to calculate and retrieve objects from the object collection based on the last held state of the iterator.

On the other hand, if in the operation 2 or 3 the decision is "NO", indicating that the iterator is in the transient state, the object handler is initialised to an initial position with regard to the object collection. The initial position of the iterator with regard to the object collection can be permanently stored in a non-volatile memory, e.g. upon configuring the chip device or upon setting the state of the iterator as transient. The initial position may be any predefined starting position of the handler with regard to the object collection or, more precisely, referring to the handle 114 with regard to the object collection 120. For example, the initial position can be defined as a position between the first object 12_1 of the object collection 120 and the second object 12_2 in Fig. 1, or any other location.

Following operations 204 and 205 the flow continues to an operation 206, for serving requests to the object collection, e.g. received from applications such as the application 130 or 140 of Fig. 1, and as for example outlined with regard to the previous embodiments.

Accordingly, the above embodiment enables consistent and well defined access to objects of an object collection on a chip device even in the presence of a reset operation of at least part of the chip device.

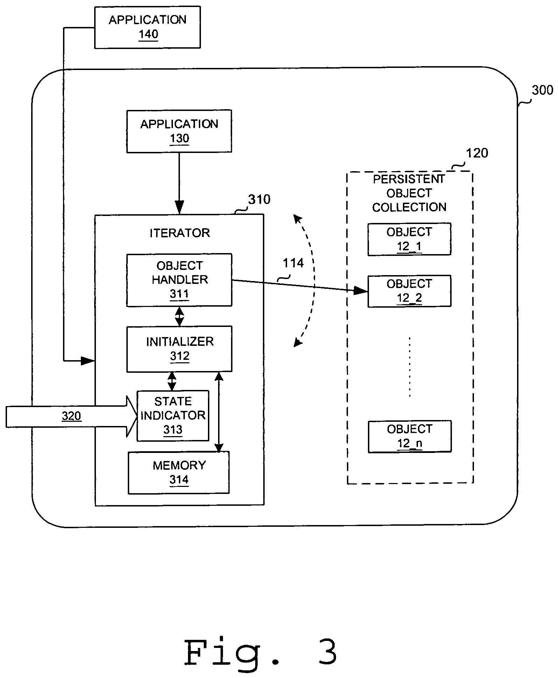

In the following a further embodiment of the invention will be outlined with regard to Fig. 3.

Fig. 3 illustrates elements of a chip device, particularly illustrating elements of the iterator in connection with holding a state of the iterator and holding a position o the object handler.

The embodiment of Fig. 3 is similar to the embodiment of Fig. 1, and elements in Fig. 3 having like reference numerals as in Fig. 1 have the same configuration as the corresponding elements of Fig. 1 and a detailed explanation thereof will be omitted at this point.

Fig. 3 illustrates a chip device 300 comprising an object collection 120 with a plurality of objects 12_1, 12_2... 12_n. Further, the chip device 300 includes an iterator 310 for enabling access to the objects of the object collection, e.g. upon request from an application internal or external to the chip device. The iterator comprises an object handler 111 having a handle 114 for effectively accessing the objects of the object collection and retrieving corresponding information. Further, the iterator 310 comprises an initializer 312 for initialising the object handler after a reset operation into a position held with regard to the collection before the reset operation, if the iterator is in the persistent state, and for initialising the handler after the reset operation into an initial position with regard to the object collection, if the iterator in the transient state.

To enable the initialisation operation of the object handler, the initializer 312 has access to a state indicator 313 holding information indicating the state of the iterator, i.e., whether the iterator is in the persistent state or the transient state. Further, the initializer 312 has access to a memory 314 of the iterator, the memory holding the position of the handler with regard to the object collection before the reset, if the state indicator indicates the persistent state, and for holding an initial position with regard to the object collection, if the state indicator indicates the transient state. In an alternative, it is also possible that the memory 314 holds both, i.e. the position before the reset and the initial position of the handler with regard to the object collection. The memory, as noted before, preferably say non-volatile memory, such that its content is not last during a reset operation.

Moreover, the state indicator, as illustrated by an arrow denoted 320, is accessible to set the state of the state indicator i.e., to set the state of the iterator into the transient state or persistent state. The access to the state indicator may be available from the chip device, e.g. for an operating system of the chip device, or from an external location such as a computing device hosting the chip device. It is possible to change the state of the state indicator from the transient state to the persistent state and vice versa from the persistent state to the transient state during operations or at any other point in time. The state indicator, as noted before, may essentially involve a flag, enabling indication of two different states, the persistent state and the transient state. Through access to the state indicator, the flag could, for changing the state of the iterator, be reversed.

During operations, upon determining a start or initialisation instruction, the initializer 312 will there access the state indicator 313 and retrieve the state information regarding the iterator. Further, the initializer may determine whether the iterator is in the persistent state, and if so, the initializer retrieves from the memory 314 the position of the handle 114 held before the reset operation, i.e. a last held position of the handle 114. Likewise if the state indicator indicates the transient state, the initializer retrieves the initial state of the handle 114 from the memory 314.

The initializer 312 then sets the handle 114 of the object handler into the retrieved position, completing the initialisation of the iterator, the iterator thus being ready for receiving and serving access request to the object collection as noted before.

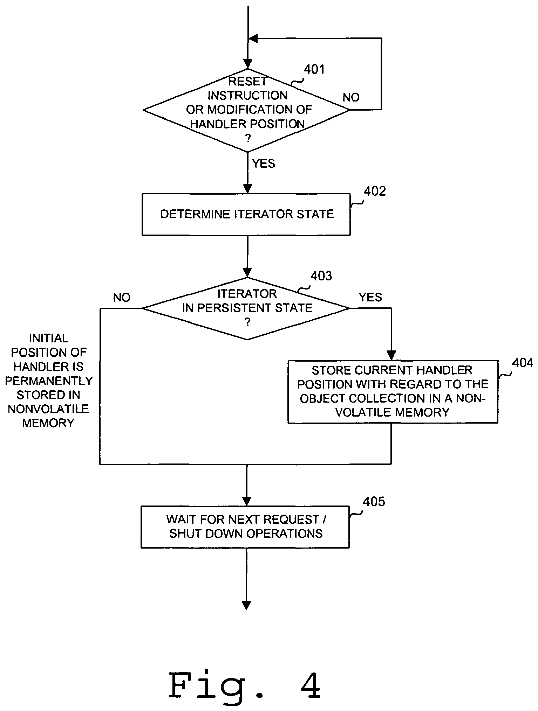

A further embodiment of the invention will now be described with regard to Fig. 4.

Fig. 4 illustrates operations of a method for accessing objects of an object collection, particularly illustrating operations for storing a handler position with regard to the object collection. The operations of Fig. 4 may be carried out using the arrangements shown in Fig. 1 and 3, however, Fig. 4 is not limited thereto.

In a first operation 401 it is determined whether a reset operation was initiated, e.g. by a reset instruction. Alternatively, operation 401 includes determining, whether the handler position was modified, e.g. during regular operations.

If in operation 401 the decision is "NO" the flow of operation remains in a waiting position, until a reset instruction or handler position modification takes place.

Accordingly, if in the operation 401 the decision "Yes", indicating reception of a reset instruction or alternatively detecting a modification of the handler position, in an operation 402 the iterator state is determined. Determining the iterator state preferably includes determining a position taken by the iterator with regard to the object collection, such as a position of a handle 114 with regard to the object collection 120 shown in Figs. 1 or 3.

In an operation 403 it is then determined whether the iterator is in the persistent state. The determination may take place as outlined with regard to previous embodiments, i.e. a state indicator may be interrogated for determining the state of the iterator.

If in operation 403 the decision "YES", indicating that the iterator is in the persistent state, the current handler position with regard to the object collection is stored in a non-volatile memory. Accordingly, upon detection of a reset instruction, if the iterator is in the persistent state, before the reset is actually carried out, the current handler position, i.e. the last handler position with regard to the object collection is saved. In the alternative, if the operation 401 detects a modification of a handler position, each time the handler position is modified and if the iterator is in the persistent state, the current handler position with regard to the object collection is stored, i.e., the handler position is tracked, so that upon a sudden reset of the chip device or parts thereof, the last held position of the object handler is always recoverable.

If in operation 403 the decision is "NO", indicating that the iterator is in the transient state, no action is taken, as the initial position of the handler will in this case be permanently stored in a non-volatile memory.

Thereafter, in an operation 405 it is waited for a next request or operations are shut down. More precisely, if in operation 401 the reset instruction is determined, operation 405 preferably includes a shut down of operations of the chip device or parts thereof, whereas, if operation 401 determines a modification of the handler position, operation 405 will include waiting for a next request to access the object collection.

The embodiment of Fig. 4 thus enables securely saving the handler position for a recovery of the handler position after a reset.

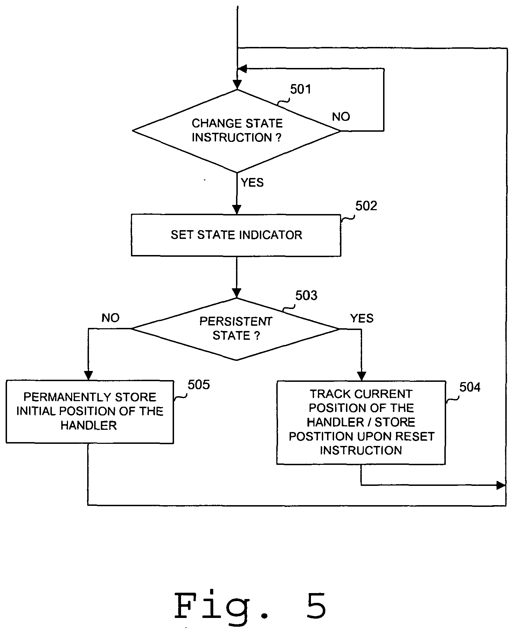

In the following a further embodiment of the invention will be described with regard to Fig. 5.

Fig. 5 shows operations of a method for accessing objects of an object collection, particularly illustrating setting the iterator state.

In a first operation 501 it is determined, whether a change of a state instruction is received, for example by the chip device 100 of Fig. 1 or the chip device 300 of Fig. 3. The change of state instruction may originate from an operating system of the chip device or a computing device hosting the chip device or may originate from any other location, such as an application program for configuring the chip device or the iterator. As long as the decision of operation 501 is "NO", the flow remains in a waiting loop. If in operation 501 the decision is "YES", i.e., if a change of state instructions is received, in an operation 502 the state indicator is correspondingly set. Setting the state indicator preferably includes setting an indicator or switch of the chip device for iterator indicates the state of the iterator as the persistent state or the transient state. The change of state instruction may include a simple command to switch from a current state to the other states, i.e. either from the persistent state to the transient state, or from the transient state to the persistent state, or, the change of state instruction may include a definition of the desired state after operation 502. For example, the state indicator can be set by accessing a flag indicating the iterator state, as outlined with regard to Figs. 1 or 3.

Thereafter, in an operation 503 it is determined whether the state indicator indicates the persistent state, and, if "YES", in an operation 504 the current position of the handler is tracked, or the iterator is set such that upon detecting a reset instruction a last position of the handler is saved.

Alternatively, if in operation 503 the decision is "NO", indicating that the state indicator indicates the transient state, an initial position of the handler is permanently stored, i.e., any desired initial position of the handler after each reset.

According to another example, the iterator itself is a persistent object, i.e. an object which, once created, does not simply cease to exist when not any longer accessed. For example the iterator can be created upon a first initialisation or programming of the chip device.

According to another example, the iterator is generated based on a request to the object collection, e.g. if an application attempts to access the object collection. Accordingly, the iterator could be created upon a first access to the object collection. Further, a configuration application may be provided for configuring the chip device and for correspondingly instructing generation of the iterator for the object collection. The configuration program can be enabled to configure the chip device in that object collections are transferred or placed onto a memory of the chip device, and corresponding iterators for traversing through the object collections can be established.

According to another example, the configuration program incorporates a limit function for limiting the number of iterators which can be generated or coexist simultaneously. The limit functionality avoids an excessive number of iterators and associated load on the processing elements of the chip device.

In order to obtain improved control over the iterator generation and life time, the iterator may be provided with an interface for access by a configuration program. The interface may enable the configuration application to instruct the iterator to dereference from the object collection, e.g. if the iterator shall be deleted or otherwise modified.

Similarly, the iterator may comprise an access interface for communicating with one or a plurality of applications requesting access to the object collection, such as the applications 130 and 140 shown in Fig. 1. The interface or API enables a framework for consistent and defined access to the iterator by applications.

Still further, the iterator may be associated with a single communication channel available for accessing the chip device, so that a given communication channel can be used by external applications or computing devices to access a specific iterator and object collection. A plurality of communication channels can be provided for access to a plurality of iterators. According to yet another example, the communication channel or channels may at least partially be constituted by logical channels.

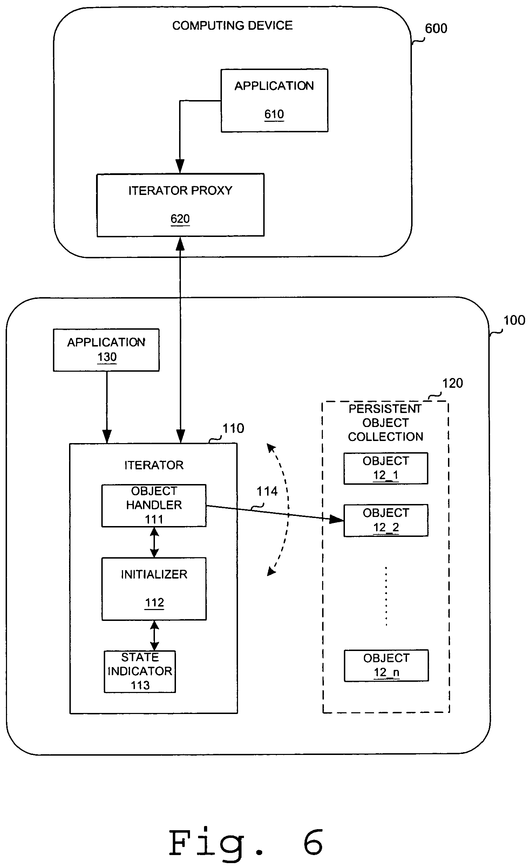

In the following a further embodiment of the invention will be described with regard to Fig. 6.

Fig. 6 illustrates elements of a computing environment including a chip device and a computing device accessing the chip device.

The chip device of Fig. 6 is similar to the chip device shown in Fig. 1, and elements in Fig. 6 having the same or corresponding reference numerals to elements of Fig. 1 have the same or corresponding configuration and functionality and will not be outlined at this point.

Fig. 6 illustrates a chip device 100 including an object collection 120, having objects 12_1, 12_2, ..., 12_n. Further, the chip device comprises an iterator 110 including an object handler 111 with a handle 114, including an initializer 112 and a state indicator 113. Operations of the 100 correspond to the operations of the chip device outlined with regard to Fig. 1.

Fig. 6 further illustrates a computing device 600 hosting an application 610 and an iterator proxy 620 for enabling access to the iterator 110 on the chip device.

In addition to the iterator proxy 620, there may be further applications enabled to access the iterator, e.g. on chip device applications, such as the application 130 of Fig. 1, or external applications such as the application 140 of Fig. 1.

The computing device 600 may be any external computing device connectable to the chip device, such as a computing device hosting the chip device, or provided with a card reader for insertion of the chip device 100. Alternatively or in addition thereto, the computing device 600 may be connected to the chip device via a network.

In an example the computing device is a mobile computing device hosting the chip device, such as a mobile telephone, laptop computer, personal digital assistant (PDA) or similar.

The application 610 of the computing device may be any service application executed on the computing device and wishing to access objects of the object collection 120 on the chip device, or may be a system application or part of an operating system of the computing device.

The application 610, desiring to access an object of the object collection, first accesses an iterator proxy 620 resident on the computing device. The iterator proxy 620 replicates the interface of the iterator 110 towards the application 610, i.e., the iterator proxy 620, viewed from the application 610, provides for the same behaviour as the iterator 110 itself. Accordingly, the application 610, whishing to access an object of the object collection, can place a request for access and transmit same towards the iterator proxy 620, as if the request would be sent to the iterator 110 itself.

The iterator proxy 620, upon receiving the request from the application, is configured to forward the request appropriately to the iterator 110 resident on the chip device 100. The computing device may be implemented with one iterator proxy 620 for the iterator 110, enabling access from one or a plurality of applications at the computing device 600 or further computing devices to the object collection 120.

Upon retrieving the desired object from the object collection, the iterator 110 forwards the corresponding information to the iterator proxy 620, which replies to the application 610, in the same way as the iterator 110 itself will reply to an application requesting access. Accordingly, applications on the computing device can access objects of the object collection through the iterator proxy 620 without requiring further functionality to select and route requests to the iterator 110 itself on the chip device 100.

The iterator proxy 620 may be implemented as a software program for execution on a processing unit of the computing device 600 or may at least partially be realized in hardware or firmware. In an alternative the iterator 110 is accessible via a plurality of iterator proxies such as the iterator proxy 620, resident on further computing devices.

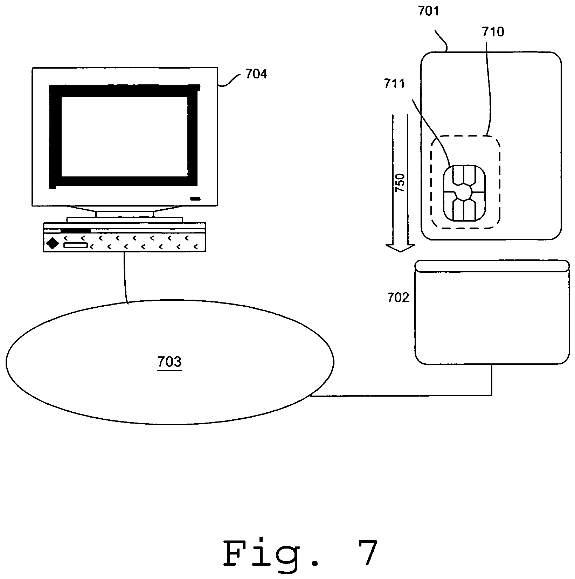

In the following a further embodiment of the invention will be described with regard to Fig. 7.

Fig. 7 illustrates elements of a computing environment including a chip device 701, a chip device reader 702, a network 703 and a computing device 704.

The chip device 701 in this embodiment is configured as a card device including a chip element 711 having the elements and functionality of at least the object collection and iterator shown in Fig. 1.

While the card device 701 may have a size of for example a credit card, in an alternative it is also possible that the chip element 711 is implemented on a smaller card element, as shown by the dashed line 710. In this case the chip device may for example constitute a smart card or SIM card for use in a mobile device according to a mobile communication standard such as the GSM standard or UMTS standard.

The chip device 701 or 710 with the chip elements 711 is insertable into the reader 702, indicated by the arrow 750.

The reader 702 may be any kind of reading device connectible to terminals of the chip elements 711 of the card device.

With the chip device inserted into the reader 702, the computing device 704 is enabled to access the chip device via the network 703, in order to access elements of the object collection.

Any requests to access the object collections can be send from the computing device 704 via the network 703, the card reader 702 towards the chip element 711, where they are appropriately processed and any response information is transmitted back from the chip device 711 via the card reader 702, the network 703 to the computing device 704.

The network 703 may be any kind of computing network, such as a local area network, the Internet and similar. In an alternative, it is, however, also possible that the network 703 is omitted, and that a direct connection between the reader 702 and the computing device 704 is used.

According to still another alternative, the reading device 702 may be directly coupled to a mobile computing device or integrally formed into the mobile computing device, such as a mobile telephone or laptop computer, in order to enable the mobile computing device to access the chip element.

It is noted that a program or programs may be provided having instructions adapted to cause a processing unit or a network of data processing units to realize elements of the above embodiments and to carry out the method of at least one of the above operations. Further, a computer readable medium may be provided, in which a program is embodied, where the program is to make a computer or chip device execute the method or the above operations.

Also, a computer-readable medium may be provided having a program embodied thereon, where the program is to make a chip device to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The data stream or the data structure may constitute the computer-readable medium. Still further, a computer program product may be provided comprising the computer-readable medium.

According to another embodiment an iterator for a chip device includes: an handler code section containing instructions to access objects of an object collection; a code section containing instructions to indicate one of a persistent and a transient state of the iterator; a code section containing instructions to initialize the handler after a reset operation into a position held with regard to the object collection before the reset operation, if the state indicates the persistent state, and to initialize the handler after the reset operation into an initial position with regard to the object collection, if the state indicates the transient state.

According to another example the iterator includes a code section containing instructions to switch between the persistent state and the transient state of the iterator.

According to another example a code section is provided to generate the iterator based on a request to the object collection.

According to another example the iterator includes a code section containing instructions of an interface for receiving an instruction to dereference the iterator from the object collection.

According to another example the iterator includes a code section containing instructions of an access interface for communicating with an application requesting access to the object collection, the application being internal or external to the chip device.

According to another example the iterator includes a code section containing instructions to assign the iterator to a communication channel for access from the outside.

In another example, a program or group of programs may be provided having instructions adapted to carry out at least part of the methods of any one of the above embodiments. A computer readable medium may embody the program and may be provided on a computer program product.

## Claims

1. A chip device (100) including an iterator (110), the iterator comprising:
a handler (111) for accessing objects (12) of a persistent object collection (120);
a state indicator (113) for indicating one of a persistent and a transient state of the iterator;
an initializer (112) for initialising the handler after a reset operation into a position held with regard to the persistent object collection before the reset operation, if the state indicator indicates the persistent state, and for initialising the handler after the reset operation into an initial position with regard to the persistent object collection, if the state indicator indicates the transient state.

2. The chip device according to claim 1, wherein the reset operation includes resetting one of the chip device and an application (140) executed on the chip device.

3. The chip device according to at least one of the preceding claims, including handler position memory for storing a current handler position of the handler with regard to the persistent object collection in a non-volatile memory, if the state indicator indicates the persistent state.

4. The chip device according to claim 3, wherein the handler position memory is adapted to store the current handler position each time the position of the handler is modified during operation of the chip device.

5. The chip device according to at least one of the claims 3 or 4, wherein the handler position memory is adapted to store the current handler position in a non-volatile memory upon detecting a reset operation.

6. The chip device according to at least one of the claims 1 and 2, including initial position memory for permanently storing an initial position of the handler, if the state indicator indicates the transient state.

7. The chip device according to at least one of the preceding claims, wherein the state indicator is adapted to switch between the persistent state and the transient state.

8. The chip device according to at least one of the preceding claims, wherein the iterator is a persistent object.

9. The chip device according to at least one of the preceding claims, wherein the iterator is generated based on a request to the persistent object collection.

10. The chip device according to at least one of the preceding claims, wherein the iterator comprises an interface for receiving an instruction to dereference the iterator from the persistent object collection.

11. The chip device according to at least one of the preceding claims, wherein the iterator comprises an access interface for communicating with an application requesting access to the persistent object collection, the application being internal or external to the chip device.

12. The chip device according to at least one of the preceding claims, wherein the access interface is shareable by a plurality of applications.

13. The chip device according to at least one of the preceding claims, wherein the iterator is assigned to a communication channel.

14. The chip device according to at least one of the preceding claims, wherein the chip device is a card device.

15. Method for accessing objects of a persistent object collection of a chip device, comprising:
determining a state indicator indicating one of a persistent and a transient state;
if the state indicator indicates the persistent state, initialising a handler for accessing the objects of the persistent object collection after a reset operation into a position held with regard to the persistent object collection before the reset operation; and
if the state indicator indicates the transient state, initialising the handler after the reset operation into an initial position with regard to the persistent object collection.

16. Method according to claim 15, wherein the reset operation includes resetting one of the chip device and an application executed on the chip device.

17. Method according to at least one of the claims 15 and 16, including storing a current handler position of the handler with regard to the persistent object collection in a non-volatile memory, if the state indicator indicates the persistent state.

18. Method according to claim 17, including storing the current handler position each time the position of the handler is modified during operation of the chip device.

19. Method according to at least one of the claims 17 or 18, including storing the current handler position in a non-volatile memory upon detecting a reset operation.

20. Method according to at least one of the claims 15 and 16, including permanently storing an initial position of the handler, if the state indicator indicates the transient state.

21. Method according to at least one of the claims 15 to 20, including switching between the persistent state and the transient state.

22. Method according to at least one of the claims 15 to 21, wherein the iterator is a persistent object.

23. Method according to at least one of the claims 15 to 22, including receiving a request to the persistent object collection and generating the iterator based thereon.

24. Method according to at least one of the claims 15 to 23, including receiving an instruction to dereference the iterator from the persistent object collection.

25. Method according to at least one of the claims 15 to 24, including communicating with an application requesting access the persistent object collection, the application being internal or external to the chip device.

26. Method according to at least one of the claims 15 to 25, wherein the access interface is shareable by a plurality of applications.

27. Method according to at least one of the claims 15 to 26, wherein the iterator is assigned to a communication channel.

28. Method according to at least one of the claims 15 to 27, wherein the chip device is a card device.

29. A computer program having instructions that, when executed, carry out the method of any one of claims 15 to 28.

30. A computer readable medium, in which a computer program is embodied, wherein the computer program is to make a data processing device or a system execute the method of any one of claims 15 to 28.

31. A computer program product comprising the computer readable medium of claim 30.

## Patentansprüche

1. Chipvorrichtung (100), einschließlich eines Iterators (110), wobei der Iterator umfasst:
einen Handler (111) zum Zugriff auf Objekte (12) einer persistenten Objektsammlung (120);
eine Statusanzeige (113) zur Anzeige eines persistenten oder eines transienten Zustands des Iterators;
einen Initialisator (112) zum Initialisieren des Handlers nach einer Resetoperation in eine Position, die vor der Resetoperation bezüglich der persistenten Objektsammlung gehalten wurde, wenn die Statusanzeige den persistenten Zustand anzeigt, und zum Initialisieren des Handlers nach der Resetoperation in eine Anfangsposition bezüglich der persistenten Objektsammlung, wenn die Statusanzeige den transienten Zustand anzeigt.

2. Chipvorrichtung nach Anspruch 1, wobei die Resetoperation das Zurücksetzen der Chipvorrichtung oder einer Anwendung (140), die auf der Chipvorrichtung ausgeführt wird, enthält.

3. Chipvorrichtung nach mindestens einem der vorhergehenden Ansprüche, einschließlich des Handlerpositionsspeichers zum Speichern einer aktuellen Handlerposition des Handlers bezüglich der persistenten Objektsammlung in einem nichtflüchtigen Speicher, wenn die Statusanzeige den persistenten Zustand anzeigt.

4. Chipvorrichtung nach Anspruch 3, wobei der Handlerpositionsspeicher angepasst ist, die aktuelle Handlerposition jedes Mal zu speichern, wenn die Position des Handlers während der Operation der Chipvorrichtung geändert wird.

5. Chipvorrichtung nach mindestens einem der Ansprüche 3 oder 4, wobei der Handlerpositionsspeicher angepasst ist, die aktuelle Handlerposition in einem nichtflüchtigen Speicher bei Erkennung einer Resetoperation zu speichern.

6. Chipvorrichtung nach mindestens einem der Ansprüche 1 und 2, einschließlich des Anfangspositionsspeichers für die permanente Speicherung einer Anfangsposition des Handlers, wenn die Statusanzeige den transienten Zustand anzeigt.

7. Chipvorrichtung nach mindestens einem der vorhergehenden Ansprüche, wobei die Statusanzeige angepasst ist, um zwischen dem persistenten Zustand und dem transienten Zustand umzuschalten.

8. Chipvorrichtung nach mindestens einem der vorhergehenden Ansprüche, wobei der Iterator ein persistentes Objekt ist.

9. Chipvorrichtung nach mindestens einem der vorhergehenden Ansprüche, wobei der Iterator eine Anfrage für die persistente Objektsammlung ist.

10. Chipvorrichtung nach mindestens einem der vorhergehenden Ansprüche, wobei der Iterator eine Schnittstelle für den Empfang einer Anweisung zur Entreferenzierung des Iterators von der persistenten Objektsammlung umfasst.

11. Chipvorrichtung nach mindestens einem der vorhergehenden Ansprüche, wobei der Iterator eine Zugriffsschnittstelle für die Kommunikation mit einer Anwendung umfasst, die Zugang auf die persistente Objektsammlung anfordert, wobei die Anwendung intern oder extern bezüglich der Chipvorrichtung ist.

12. Chipvorrichtung nach mindestens einem der vorhergehenden Ansprüche, wobei die Zugriffsschnittstelle durch mehrere Anwendungen geteilt werden kann.

13. Chipvorrichtung nach mindestens einem der vorhergehenden Ansprüche, wobei der Iterator einem Kommunikationskanal zugewiesen wird.

14. Chipvorrichtung nach mindestens einem der vorhergehenden Ansprüche, wobei die Chipvorrichtung eine Kartenvorrichtung ist.

15. Verfahren für den Zugriff auf Objekte einer persistenten Objektsammlung einer Chipvorrichtung, umfassend:
Bestimmung einer Statusanzeige, die entweder einen persistenten oder einen transienten Zustand anzeigt;
wenn die Statusanzeige den persistenten Zustand anzeigt, Initialisierung eines Handlers für den Zugriff auf die Objekte der persistenten Objektsammlung nach einer Resetoperation in eine Position, die bezüglich der persistenten Objektsammlung vor der Resetoperation gehalten wird; und
wenn die Statusanzeige den transienten Zustand anzeigt, Initialisierung des Handlers nach der Resetoperation in eine Anfangsposition bezüglich der persistenten Objektsammlung.

16. Verfahren nach Anspruch 15, wobei die Resetoperation das Zurücksetzen der Chipvorrichtung oder einer Anwendung, die auf der Chipvorrichtung ausgeführt wird, enthält.

17. Verfahren nach mindestens einem der Ansprüche 15 und 16, einschließlich Speicherung einer aktuellen Handlerposition des Handlers bezüglich der persistenten Objektsammlung in einem nichtflüchtigen Speicher, wenn die Statusanzeige den persistenten Zustand anzeigt.

18. Verfahren nach Anspruch 17, einschließlich Speicherung der aktuellen Handlerposition jedes Mal, wenn die Position des Handlers während der Operation der Chipvorrichtung geändert wird.

19. Verfahren nach mindestens einem der Ansprüche 17 oder 18, einschließlich Speicherung der aktuellen Handlerposition in einem nichtflüchtigen Speicher bei Erkennung einer Resetoperation.

20. Verfahren nach mindestens einem der Ansprüche 15 und 16, einschließlich permanenter Speicherung einer Anfangsposition des Handlers, wenn die Statusanzeige den transienten Zustand anzeigt.

21. Verfahren nach mindestens einem der Ansprüche 15 bis 20, einschließlich Umschaltung zwischen dem persistenten Zustand und dem transienten Zustand.

22. Verfahren nach mindestens einem der Ansprüche 15 bis 21, wobei der Iterator ein persistentes Objekt ist.

23. Verfahren nach mindestens einem der Ansprüche 15 bis 22, einschließlich Empfang einer Anfrage für die persistente Objektsammlung und Erzeugung des darauf basierten Iterators.

24. Verfahren nach mindestens einem der Ansprüche 15 bis 23, einschließlich Empfang einer Anweisung zur Entreferenzierung des Iterators von der persistenten Objektsammlung.

25. Verfahren nach mindestens einem der Ansprüche 15 bis 24, einschließlich Kommunikation mit einer Anwendung, die Zugang zu der persistenten Objektsammlung anfordert, wobei die Anwendung intern oder extern bezüglich der Chipvorrichtung ist.

26. Verfahren nach mindestens einem der Ansprüche 15 bis 25, wobei die Zugriffsschnittstelle durch mehrere Anwendungen geteilt werden kann.

27. Verfahren nach mindestens einem der Ansprüche 15 bis 26, wobei der Iterator einem Kommunikationskanal zugeordnet ist.

28. Verfahren nach mindestens einem der Ansprüche 15 bis 27, wobei die Chipvorrichtung eine Kartenvorrichtung ist.

29. Computerprogramm, das Anweisungen aufweist, bei Ausführung das Verfahren eines der Ansprüche 15 bis 28 auszuführen.

30. Computerlesbares Medium, in dem ein Computerprogramm verkörpert ist, wobei das Computerprogramm eine Datenverarbeitungsvorrichtung oder ein System das Verfahren nach einem der Ansprüche 15 bis 28 ausführen lassen soll.

31. Computerprogrammprodukt, umfassend das computerlesbare Medium nach Anspruch 30.

## Revendications

1. Dispositif à puce (100) comportant un itérateur (110), l'itérateur comprenant :
un gestionnaire (111) destiné à accéder à des objets (12) d'une collection d'objets persistants (120) ;
un indicateur d'état (113) destiné à indiquer l'un d'un état persistant et d'un état transitoire de l'itérateur ;
un initialiseur (112) destiné à initialiser le gestionnaire après une opération de remise à l'état initial à une position maintenue relativement à la collection d'objets persistante avant l'opération de remise à l'état initial, si l'indicateur d'état indique l'état persistant, et à initialiser le gestionnaire après l'opération de remise à l'état initial à une position initiale relativement à la collection d'objets persistants, si l'indicateur d'état indique l'état transitoire.

2. Dispositif à puce selon la revendication 1, dans lequel l'opération de remise à l'état initial comporte la remise à l'état initial de l'un du dispositif à puce et d'une application (140) exécutée sur le dispositif à puce.

3. Dispositif à puce selon au moins une des revendications précédentes, comportant une mémoire de position de gestionnaire destinée à mémoriser une position de gestionnaire courante du gestionnaire relativement à la collection d'objets persistante dans une mémoire rémanente, si l'indicateur d'état indique l'état persistant.

4. Dispositif à puce selon la revendication 3, dans lequel la mémoire de position de gestionnaire est adaptée pour mémoriser la position de gestionnaire courante chaque fois que la position du gestionnaire est modifiée durant le fonctionnement du dispositif à puce.

5. Dispositif à puce selon au moins une des revendications 3 ou 4, dans lequel la mémoire de position de gestionnaire est adaptée pour mémoriser la position de gestionnaire courante dans une mémoire rémanente à la détection d'une opération de remise à l'état initial.

6. Dispositif à puce selon au moins une des revendications 1 et 2, comportant une mémoire de position initiale destinée à mémoriser définitivement une position initiale du gestionnaire, si l'indicateur d'état indique l'état transitoire.

7. Dispositif à puce selon au moins une des revendications précédentes, dans lequel l'indicateur d'état est adapté pour commuter entre l'état persistant et l'état transitoire.

8. Dispositif à puce selon au moins une des revendications précédentes, dans lequel l'itérateur est un objet persistant.

9. Dispositif à puce selon au moins une des revendications précédentes, dans lequel l'itérateur est généré en fonction d'une demande adressée à la collection d'objets persistants.

10. Dispositif à puce selon au moins une des revendications précédentes, dans lequel l'itérateur comprend une interface destinée à recevoir une instruction de déréférencement de l'itérateur de la collection d'objets persistants.

11. Dispositif à puce selon au moins une des revendications précédentes, dans lequel l'itérateur comprend une interface d'accès destinée à communiquer avec une application demandant l'accès à la collection d'objets persistants, l'application étant interne ou externe au dispositif à puce.

12. Dispositif à puce selon au moins une des revendications précédentes, dans lequel l'interface d'accès peut être partagée par une pluralité d'applications.

13. Dispositif à puce selon au moins une des revendications précédentes, dans lequel l'itérateur est assigné à un canal de communication.

14. Dispositif à puce selon au moins une des revendications précédentes, dans lequel le dispositif à puce est un dispositif à carte.

15. Procédé d'accès à des objets d'une collection d'objets persistants d'un dispositif à puce, comprenant :
la détermination d'un indicateur d'état indiquant l'un d'un état persistant et d'un état transitoire;
si l'indicateur d'état indique l'état persistant, l'initialisation d'un gestionnaire pour accéder aux objets de la collection d'objets persistants après une opération de remise à l'état initial à une position maintenue relativement à la collection d'objets persistante avant l'opération de remise à l'état initial ; et
si l'indicateur d'état indique l'état transitoire, l'initialisation du gestionnaire après l'opération de remise à l'état initial à une position initiale relativement à la collection d'objets persistante.

16. Procédé selon la revendication 15, dans lequel l'opération de remise à l'état initial comporte la remise à l'état initial de l'un du dispositif à puce et d'une application exécutée sur le dispositif à puce.

17. Procédé selon au moins une des revendications 15 et 16, comportant la mémorisation d'une position de gestionnaire courante du gestionnaire relativement à la collection d'objets persistants dans une mémoire rémanente, si l'indicateur d'état indique l'état persistant.

18. Procédé selon la revendication 17, comportant la mémorisation de la position de gestionnaire courante chaque fois que la position du gestionnaire est modifiée durant le fonctionnement du dispositif à puce.

19. Procédé selon au moins une des revendications 17 ou 18, comportant la mémorisation de la position de gestionnaire courante dans une mémoire rémanente à la détection d'une opération de remise à l'état initial.

20. Procédé selon au moins une des revendications 15 et 16, comportant la mémorisation permanente d'une position initiale du gestionnaire, si l'indicateur d'état indique l'état transitoire.

21. Procédé selon au moins une des revendications 15 à 20, comportant la commutation entre l'état persistant et l'état transitoire.

22. Procédé selon au moins une des revendications 15 à 21, dans lequel l'itérateur est un objet persistant.

23. Procédé selon au moins une des revendications 15 à 22, comportant la réception d'une demande adressée à la collection d'objets persistants et la génération de l'itérateur en fonction de celle-ci.

24. Procédé selon au moins une des revendications 15 à 23, comportant la réception d'une instruction de déréférencement de l'itérateur de la collection d'objets persistants.

25. Procédé selon au moins une des revendications 15 to 24, comportant la communication avec une application demandant l'accès à la collection d'objets persistante, l'application étant interne ou externe au dispositif à puce.

26. Procédé selon au moins une des revendications 15 à 25, dans lequel l'interface d'accès peut être partagée par une pluralité d'applications.

27. Procédé selon au moins une des revendications 15 à 26, dans lequel l'itérateur est assigné à un canal de communication.

28. Procédé selon au moins une des revendications 15 à 27, dans lequel le dispositif à puce est un dispositif à carte.

29. Programme informatique comportant des instructions qui, à leur exécution, mettent en oeuvre le procédé selon l'une quelconque des revendications 15 à 28.

30. Support lisible par ordinateur, dans lequel un programme informatique est mis en oeuvre, le programme informatique amenant le dispositif de traitement de données ou un système à exécuter le procédé selon l'une quelconque des revendications 15 à 28.

31. Produit-programme informatique comprenant le support lisible par ordinateur selon la revendication 30.
